Europäisches Patentamt

European Patent Office

Office européen des brevets

(19)

(11) Numéro de publication : **0 190 963**
**B1**

(12) **FASCICULE DE BREVET EUROPÉEN**

(45) Date de publication du fascicule du brevet :
04.05.88

(51) Int. Cl.⁴ : **F 02 C   7/232**

(21) Numéro de dépôt : **86400134.2**

(22) Date de dépôt : **23.01.86**

(54) Dispositif de dosage notamment pour le carburant d'une turbomachine.

(30) Priorité : 24.01.85 FR 8500951

(43) Date de publication de la demande :
13.08.86 Bulletin 86/33

(45) Mention de la délivrance du brevet :
04.05.88 Bulletin 88/18

(84) Etats contractants désignés :
DE FR GB

(56) Documents cités :
EP-A- 0 105 017
FR-A- 1 291 457
FR-A- 1 595 739
GB-A-   861 530
US-A- 2 593 536
US-A- 4 404 637

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Bezard, Jean Yves Louis Noel**
**29, rue des Rechèvres Vaux Le Penil**
**F-77000 Melun (FR)**
Inventeur : **Brocard, Jean-Marie**
**7, allée des Bégonias**
**F-77950 Rubelles (FR)**

(74) Mandataire : **Moinat, François**
**S.N.E.C.M.A. Service des Brevets Boîte Postale 81**
**F-91003 Evry Cedex (FR)**

EP 0 190 963 B1

Jouve, 18, rue St-Denis, 75001 Paris, France

## Description

La présente invention concerne un dispositif de dosage, notamment pour le carburant d'une turbomachine.

Pour de nombreuses applications des turbomachines, notamment pour celles destinées à équiper des véhicules aériens, il est capital qu'elles soient équipées de dispositifs de dosage insensibles à toutes espèces de pannes susceptibles d'affecter non seulement le dispositif de dosage mais aussi les différents éléments de commande qui lui sont associés.

Jusqu'à présent, le problème posé par l'obtention d'une sécurité totale de fonctionnement d'un dispositif de dosage pour turbomachine n'a été résolu qu'en doublant à la fois le dispositif de dosage et tous les éléments de commande qui lui sont associés, de manière à créer deux circuits de commande du dosage du carburant, totalement indépendants l'un de l'autre, chacun étant susceptible de fonctionner seul en cas de panne de l'autre circuit, et en y ajoutant un dispositif de commutation hydraulique permettant de passer d'un circuit à l'autre au moment voulu. Il s'agit évidemment d'une solution parfaitement sûre, mais aussi très coûteuse.

L'objet de la présente invention est de réaliser un dispositif de dosage, plus simple mais au moins aussi sûr que les dispositifs redondants actuellement connus.

Le brevet français n° 1 291 457 demandé le 9 juin 1961 décrit un dispositif de commande pour moteurs à turbine à combustion interne, qui comporte notamment un corps dans lequel une douille et un tiroir sont montés l'un à l'intérieur de l'autre, de façon à coulisser suivant un même axe, entre au moins une position relative de fermeture, où le tiroir masque complètement au moins un orifice d'entrée ou de sortie du carburant dans la douille, et une position relative d'ouverture, ou ledit tiroir démasque complètement ledit orifice. Les déplacements du tiroir sont cependant commandés essentiellement par la pression de refoulement du compresseur de la turbomachine, tandis que ceux de la douille le sont par un régulateur centrifuge, lorsque la vitesse de rotation de la turbomachine dépasse une valeur prédéterminée. Il est certain que ce dispositif de dosage, unique, est mis hors de fonctionnement dès que le tiroir ou la douille se trouve bloquée, pour une raison quelconque, dans une certaine position axiale.

Le brevet français n° 1 595 739 décrit également un dispositif de réglage de l'admission d'un combustible dans un moteur, comprenant essentiellement plusieurs douilles qui sont montées coulissantes les unes à l'intérieur des autres, suivant un même axe, entre des positions relatives permettant de régler le débit du carburant, qui a pénétré à l'intérieur desdites douilles, au niveau d'orifices de sortie de leurs parois latérales, entre une valeur minimale ou nulle et une valeur maximale. Dans ce cas également, il suffit que l'une des douilles coaxiales soit bloquée, pour une raison quelconque, pour que le dispositif de dosage cesse de fonctionner.

Le dispositif de dosage selon la présente invention, notamment pour le carburant d'une turbomachine, comporte également un corps, dans lequel deux éléments, formant respectivement une douille et un obturateur, sont montés coulissants suivant un même axe, entre au moins une position relative de fermeture, où l'obturateur masque complètement au moins un orifice d'entrée ou de sortie du carburant dans la douille, et une position relative d'ouverture où ledit obturateur démasque complètement ledit orifice. Le dispositif de dosage selon la présente invention est cependant aménagé de façon à toujours fonctionner correctement quelles que soient les pannes susceptibles d'affecter ses deux éléments coulissants et/ou les différents éléments qui leur sont associés, notamment leurs éléments respectifs de commande, ce qui permet d'obtenir une sécurité maximale de fonctionnement en utilisant un unique dispositif de dosage selon la présente invention.

Le dispositif de dosage selon la présente invention est du type qui vient d'être indiqué, et il est caractérisé par le fait que des moyens sont prévus pour commander les positions relatives simultanées des deux éléments coulissants de façon que le degré d'obturation du ou des orifices de la douille par l'obturateur corresponde à la valeur de consigne du débit de carburant.

Grâce à cette disposition, si la position de l'un quelconque des deux éléments coulissants du dispositif de dosage selon la présente invention ne peut plus être commandée, pour une raison quelconque, par exemple parce que cet élément est bloqué, l'autre élément peut toujours être commandé pour être amené dans une position, par rapport à l'élément bloqué, telle que le degré d'obturation — nul, partiel ou complet — du ou des orifices de la douille par l'obturateur, corresponde encore à la valeur de consigne du débit de carburant. Le dispositif de dosage selon la présente invention peut donc fonctionner dans des conditions parfaites même si la position de l'un ou l'autre de ses deux éléments coulissants ne peut plus être commandée correctement, soit parce que cet élément est lui-même bloqué, soit parce que son ou ses éléments de commande est ou sont en panne.

Dans une forme de réalisation préférée du dispositif de dosage selon la présente invention, les deux éléments sont montés coulissants dans des alésages distincts du corps. On évite ainsi certainement que les deux éléments coulissants ne soient bloqués simultanément, par exemple l'un par rapport à l'autre, ce qui mettrait en échec la sécurité de fonctionnement du dispositif de dosage.

Dans une forme de réalisation avantageuse du dispositif de dosage selon la présente invention, les deux éléments coulissants sont aménagés pour former respectivement les pistons de deux vérins, de préférence à double effet, qui servent à leurs positionnements respectifs, et sont alimentés de préférence avec du carburant sous pression. En outre, les alimentations des deux vérins de positionnement peuvent être commandées, par un calculateur par exemple par l'intermédiaire de deux servovannes, de façon que, en fonctionnement normal, un premier élément coulissant soit maintenu dans une position médiane de sa course entre deux premières butées, et que le second élément coulissant prenne une position correspondant à la valeur de consigne du débit de carburant, déterminée par le calculateur, entre deux secondes butées correspondant, l'une au débit maximal, et l'autre au débit minimal ou nul. Cette forme de réalisation est avantageuse notamment du fait que les variations courantes de la valeur de consigne du débit de carburant se traduisent par des déplacements du seul second élément coulissant, alors que le premier élément coulissant reste pratiquement fixe, au voisinage de sa position médiane, toujours disponible pour être éventuellement substitué au second élément coulissant dans sa fonction de commande du débit.

De préférence, des détecteurs de position sont associés respectivement aux deux éléments coulissants pour transmettre au calculateur deux signaux de position dont la différence, ou la somme algébrique, est proportionnelle à la valeur instantanée du débit du dispositif de dosage, et est comparée avec sa valeur de consigne donnée par le calculateur. En outre, des moyens, tels qu'une soupape régulatrice, peuvent être prévus pour maintenir sensiblement constante la différence des pressions du carburant entre l'entrée et la sortie du dispositif de dosage. Ces moyens permettent donc d'asservir la valeur instantanée du débit du dispositif de dosage selon la présente invention à sa valeur de consigne qui est déterminée à chaque instant par le calculateur à partir des différentes informations qu'il reçoit, relativement, en particulier, aux conditions de marche de la turbomachine, et éventuellement du véhicule aérien dont elle assure le mouvement.

Dans le cas de la forme de réalisation indiquée plus haut, il est avantageux que la course totale du premier élément coulissant, de part et d'autre de sa position médiane, soit choisie double de la course du second élément coulissant, et que des moyens soient prévus pour que, dans le cas où le second élément se trouve bloqué, le premier élément soit commandé par le calculateur pour prendre une position relative, correspondant à la valeur de consigne du débit du carburant. Grâce à ce dimensionnement de la course totale du premier élément coulissant, celui-ci peut être utilisé pour commander le débit de carburant même si le second élément coulissant se trouve bloqué contre l'une ou l'autre de ses deux butées.

Pour tenir compte des cas où c'est le premier élément coulissant qui se trouverait bloqué au voisinage de l'une des premières butées, des moyens peuvent être en outre prévus, selon la présente invention, pour que les secondes butées soient effacées automatiquement, de façon que le second élément puisse être commandé pour prendre une position relative correspondant à la valeur de consigne du débit. En effet, si, par exemple en raison de phénomènes de dérive, le premier élément coulissant venait à s'écarter de sa position médiane pour se rapprocher de l'une des premières butées et se trouvait alors bloqué dans une telle position, soit pour des raisons mécaniques, soit en raison d'une panne de ses éléments de commande, les secondes butées, si elles étaient fixes, s'opposeraient en général à ce que le second élément coulissant puisse prendre une position relative, par rapport au premier élément coulissant, qui correspondrait à la valeur de consigne du débit de carburant ; pour permettre au second élément coulissant de continuer à coopérer avec le premier élément coulissant quelle que soit la valeur de consigne imposée au débit, il est donc nécessaire d'effacer les secondes butées.

A cet effet, les secondes butées peuvent être montées coulissantes suivant le même axe que les deux éléments et être commandées, entre leur position normale et leur position d'effacement, par des vérins, alimentés de préférence par du carburant sous pression, par exemple par l'intermédiaire d'un électro-robinet actionné par le calculateur. Alors de préférence, la course de chacune des secondes butées coulissantes, entre sa position normale et sa position d'effacement, est voisine de la course normale du second élément coulissant. Cette dernière disposition est nécessaire pour permettre au second élément coulissant de prendre, par rapport au premier élément coulissant, bloqué contre l'une des premières butées, une position correspondant à la valeur maximale ou à la valeur minimale du débit.

Le dispositif de dosage selon la présente invention est susceptible de diverses réalisations mécaniques, fonctionnellement équivalentes.

Dans une première forme de réalisation, l'obturateur forme un tiroir coulissant à l'intérieur de la douille, de façon à masquer ou à démasquer, complètement ou partiellement, au moins un orifice d'entrée ou de sortie du carburant, aménagé dans la paroi de la douille.

Dans cette première forme de réalisation, des groupes d'orifices servant les uns à l'entrée et les autres à la sortie du carburant, sont distribués sur le pourtour de la paroi de la douille, au niveau d'un même plan transversal et selon une symétrie axiale. Cette disposition est avantageuse dans la mesure où le dispositif de dosage est traversé par des jets de carburant de même direction mais de sens opposés car les forces exercées par ces jets sur chaque élément mobile, douille et obturateur respectivement, s'équilibrent sensiblement ; la disposition des orifices d'entrée et de sortie dans un même plan transversal permet également de réduire l'encombrement axial du dispositif de dosage selon la présente invention.

Dans une autre variante, deux séries de chambres d'entrée et de sortie sont aménagées dans le corps de façon que les orifices d'entrée et les orifices de sortie du carburant s'y ouvrent respectivement quelle que soit la position de la douille coulissante, et lesdites chambres d'entrée et de sortie sont raccordées en parallèle, respectivement à un distributeur périphérique et à un collecteur périphérique, situés dans deux plans transversaux, écartés axialement l'un de l'autre. Cette disposition offre encore l'avantage d'équilibrer sensiblement les forces exercées par les jets de carburant sur la douille et sur l'obturateur.

Dans une seconde forme de réalisation du dispositif de dosage selon la présente invention, l'obturateur comporte un pointeau, monté coulissant à l'extérieur de la douille, de façon à masquer ou démasquer, complètement ou partiellement, un orifice d'entrée ou de sortie du carburant, aménagé à l'une des extrémités de la douille. Cette disposition est particulièrement avantageuse dans la mesure où les mouvements relatifs de l'obturateur et de la douille assurent un nettoyage permanent de l'orifice de la douille, évitant ainsi certainement son obturation intempestive par des impuretés du carburant.

A titre d'exemples, on a décrit ci-dessous et illustré schématiquement au dessin annexé, plusieurs formes de réalisation du dispositif de dosage selon la présente invention.

La figure 1 est une vue en coupe longitudinale d'une première forme de réalisation du dispositif de dosage selon la présente invention.

La figure 2 représente une première variante de la forme de réalisation de la figure 1, en coupe suivant la ligne II-II de la figure 1.

La figure 3 est une vue partielle, en coupe longitudinale, d'une deuxième variante de la forme de réalisation de la figure 1.

La figure 4 est une vue en coupe suivant la ligne IV-IV de la figure 3.

La figure 5 est une vue, en coupe longitudinale, d'une deuxième forme de réalisation du dispositif de dosage selon la présente invention.

La figure 6 est le schéma d'une installation de commande d'un dispositif de dosage selon la présente invention.

La figure 7 est un schéma expliquant les différents cas de fonctionnement de la réalisation de la figure 1 commandée par l'installation illustrée sur la figure 6.

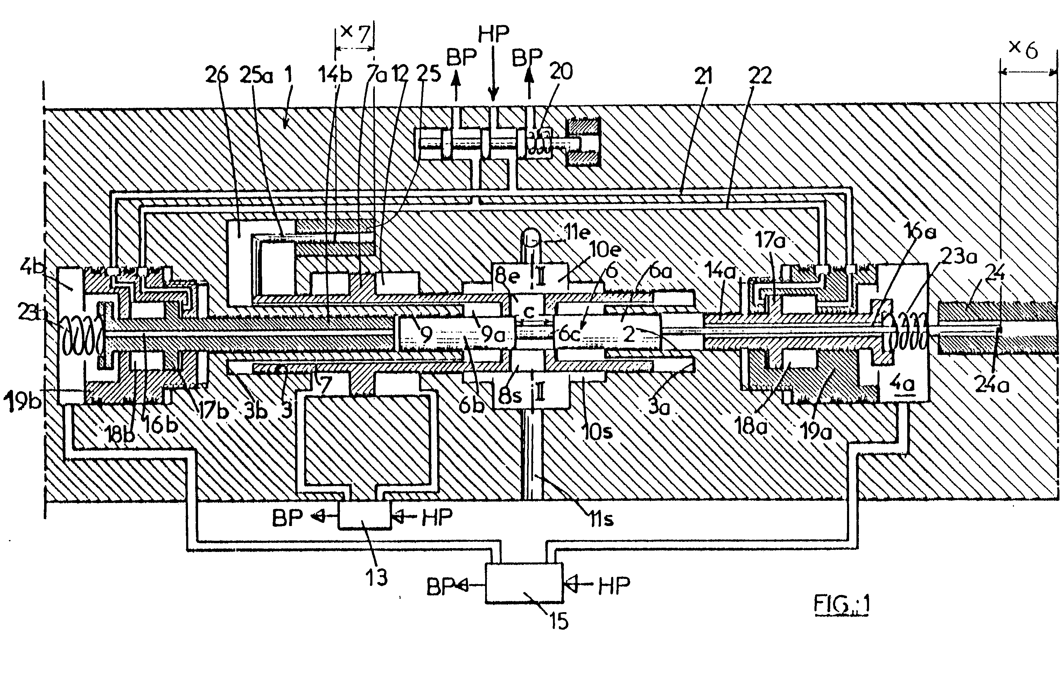

Sur la vue en coupe de la figure 1, 1 désigne le corps d'un dispositif de dosage selon la présente invention, dans lequel sont aménagés deux alésages coaxiaux, 2 et 3. L'alésage de plus petit diamètre, 2, s'étend entre deux chambres extrêmes, 4a et 4b. Dans cet alésage intérieur 2, peut coulisser librement un tiroir 6, qui, dans cette forme de réalisation, est formé de deux pistons, 6a et 6b, dont les faces en regard sont maintenues écartées d'une distance c par une barre de section réduite 6c. Dans l'alésage externe, 3, est montée coulissante une douille 7, pour laquelle les extrémités, 3a et 3b dudit alésage 3, constituent des butées fixes. Dans la paroi de la douille 7 sont aménagés, l'un en regard de l'autre, deux perçages 8e et 8s, dont chacun présente, dans la direction axiale, une étendue voisine de c. De même, la longueur de la douille 7 est telle que, dans sa position médiane illustrée sur la figure 1, ses extrémités se trouvent à des distances égales entre elles et à la même distance c, des butées fixes 3a et 3b. La paroi tubulaire 9, qui est solidaire du corps 1 et qui isole l'un de l'autre les alésages 2 et 3, est cependant interrompue, symétriquement par rapport à la position médiane précédemment mentionnée, de la douille 7, sur une longueur axiale au moins égale à 3c, dans la zone désignée par 9a. Des chambres d'entrée et de sortie du carburant, 10e et 10s respectivement, chacune de longueur au moins égale à 3c, sont aménagées dans l'alésage 3 de manière que les orifices 8e et 8s de la douille 7 se trouvent toujours en regard desdites chambres 10e et 10s, respectivement, quelle que soit la position de la douille 7 dans son alésage. La chambre 10e est raccordée, notamment par un canal 11e, au refoulement de la pompe à carburant — non représentée —, qui peut être une pompe volumétrique ou une pompe centrifuge ; la chambre de sortie du carburant, 10s, est reliée, notamment par un canal 11s, aux injecteurs disposés dans la ou les chambres de combustion — non représentés — de la turbomachine.

Le positionnement de la douille 7 dans son alésage 3 est assuré par un piston 7a, qui est monté coulissant, avec étanchéité, dans une chambre cylindrique 12, aménagée dans le corps 1, concentriquement à l'alésage 3, de façon à former un vérin à double effet. Une servovanne, 13, d'un type connu, qu'il n'est pas nécessaire de décrire en détail, permet, lorsqu'elle reçoit une excitation électrique appropriée, comme on l'expliquera ultérieurement, de commuter l'arrivée d'un fluide sous pression, HP, par exemple du carburant refoulé par la pompe, dans la chambre 12, sur l'une ou l'autre des deux faces du piston 7a, dont l'autre face se voit en même temps appliquer une basse pression, BP.

Les déplacements du tiroir 6 dans son alésage 2 sont limités par deux butées mobiles, 14a et 14b, dont les extrémités, en forme de pistons, sont montées librement coulissantes, avec étanchéité, dans l'alésage 2, de part et d'autre des extrémités du tiroir 6. Dans sa position normale, qui est illustrée sur la figure 1, la butée gauche, 14b, peut arrêter l'élément 6b du tiroir 6 dans une position pour laquelle les orifices 8e et 8s de la douille 7 sont entièrement démasqués, du fait que la barre 6c du tiroir 6 se trouve exactement à leur niveau. Dans cette position du tiroir 6, le débit du carburant traversant le doseur est maximum. Pour toutes les positions du tiroir 6 situées plus à droite, par exemple pour la position illustrée sur la figure 1, la surface latérale de l'élément 6b du tiroir 6 recouvre partiellement l'orifice d'entrée 8e ainsi que l'orifice de sortie 8s, ce qui réduit le débit du carburant qui, après avoir traversé la douille 7, s'échappe du dispositif de dosage par la chambre 10s et le canal 11s. Enfin, lorsque le tiroir 6 a exécuté une course c à partir de sa position extrême gauche, contre la butée 14b, son élément 6a est arrêté par la butée 14a, convenablement dimensionnée. L'élément 6b du tiroir 6 obture alors complètement les orifices d'entrée 8e et de sortie 8s de la douille 7, si bien qu'il sort du canal 11s du dispositif de dosage, un débit de carburant pratiquement nul.

Le positionnement du tiroir 6 entre ses deux butées, 14a et 14b, est obtenu de la façon suivante : une seconde électro-vanne 15, qui reçoit par exemple du carburant sous pression, HP, commute ce dernier soit vers la chambre 4a, soit vers la chambre 4b, en fonction d'un signal électrique dont la production sera décrite ultérieurement. Si, par exemple, le carburant sous pression est envoyé par des conduits appropriés dans la chambre 4a, il parvient également sur la face droite — sur la figure 1 — de l'élément 6a du tiroir 6, à travers un alésage 16a de la butée 14a ; le mouvement du tiroir 6 vers la gauche de la figure 1, qui en résulte, refoule alors du carburant par un perçage axial 16b de la butée 14b ; le carburant parvenu dans la chambre 4b est ensuite refoulé vers la basse pression, BP, par des conduits appropriés et l'électro-vanne 15.

Le positionnement de chacune des deux butées mobiles, 14a et 14b, est encore assuré par des vérins comprenant chacun un piston, 17a ou 17b, coulissant avec étanchéité dans une chambre cylindrique 18a ou 18b ; dans la forme de réalisation illustrée sur la figure 1, chacune des chambres 18a et 18b est aménagée dans une douille 19a ou 19b, montée de façon étanche et fixée, par exemple par vissage, dans la chambre 4a ou 4b respectivement. Un électro-robinet, 20, dont on a représenté une forme de réalisation parmi beaucoup d'autres de fonctionnement équivalent, permet, lorsqu'il reçoit un signal électrique approprié dont la production sera décrite ultérieurement, de commuter un fluide sous pression, HP, par exemple du carburant refoulé par la pompe, vers l'un des deux conduits, 21 et 22, dont chacun alimente en parallèle les chambres correspondantes des deux vérins 17a-18a et 17b-18b. Pour la position illustrée de l'électro-robinet, 20, le carburant sous pression est envoyé par le canal 21 respectivement sur les faces droite et gauche des pistons, 17a et 17b, qui poussent les butées mobiles correspondantes, 14a et 14b, vers leurs positions normales respectives, illustrées sur la figure 1, où elles sont en outre maintenues par des ressorts de rappel, 23a et 23b.

Les positions instantanées du tiroir 6 et de la douille 7 sont déterminées par deux détecteurs de position, 24 et 25, par exemple du type inductif ; chacun de ces deux détecteurs de position, 24 et 25, est constitué par exemple par un bobinage cylindrique dans un perçage axial duquel peut se déplacer une tige, 24a ou 25a, par exemple en un matériau magnétique ; la tige 24a, droite, traverse, avec un jeu important, le perçage axial 16a de la butée mobile 14a, et son extrémité opposée au détecteur 24 est fixée à l'élément 6a du tiroir 6. Quant à la tige 25a du détecteur de position 25, elle est coudée, fixée a une extrémité de la douille 7, et se déplace en même temps que la douille 7 dans une chambre 26 aménagée dans le corps 1 ; la tige coudée 25a sert également à immobiliser la douille 7 en rotation dans son alésage 3.

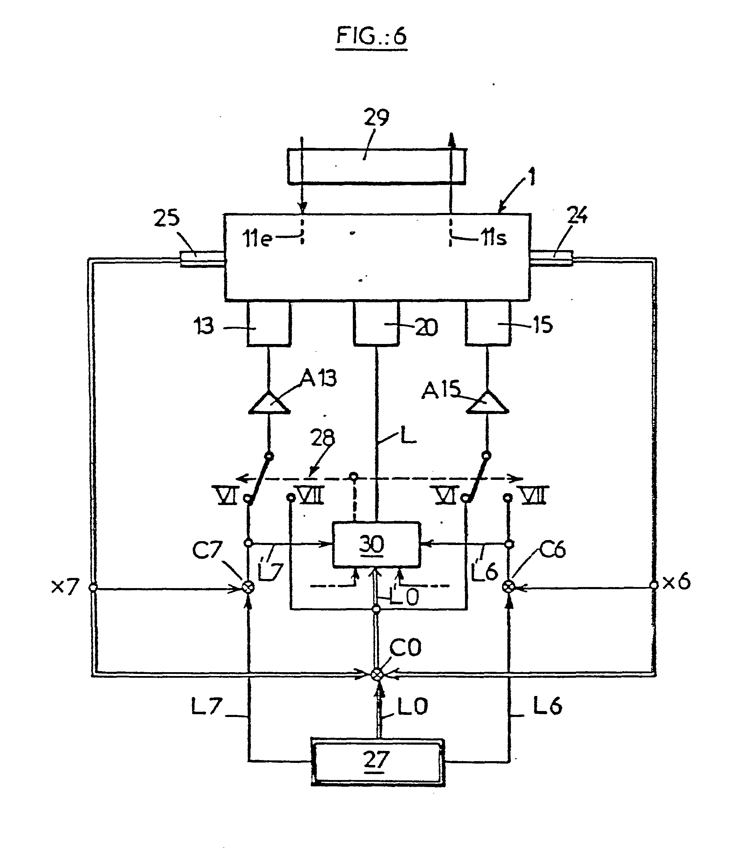

Sur le schéma de montage de la figure 6, on a représenté par des rectangles : 1 le dispositif de dosage qui vient d'être décrit à l'aide de la figure 1, 13 et 15 les électro-vannes, 20 l'électro-robinet, 24 et 25 les détecteurs de position qui ont été mentionnés au cours de cette description. 27 désigne un calculateur qui reçoit, par des lignes non représentées, toutes les informations nécessaires à la commande du dispositif de dosage 1. Sur sa ligne de sortie Lo, le calculateur 27 envoie un signal correspondant à la valeur instantanée de consigne du débit, tandis que, sur ses lignes de sortie L6 et L7, il envoie des signaux de consigne correspondant respectivement au maintien du tiroir 6 contre sa butée 14a et au maintien de la fourrure 7 dans sa position médiane pour laquelle son piston 7a se trouve au milieu de la chambre 12 du vérin correspondant.

Les capteurs de position 24 et 25 donnent des signaux respectivement proportionnels aux déplacements x6 et x7 du tiroir 6 et de la douille 7 (figure 1), mesurés le long de leur axe commun, par exemple de droite à gauche de la figure 1 à partir d'origines fixes par rapport au corps 1 et respectivement choisies pour que la différence x6-x7 soit proportionnelle à l'aire des orifices 8e et 8s de la douille 7 démasquée par le tiroir 6.

Une soupape régulatrice 29 est montée entre les canaux d'entrée et de sortie 11e et 11s du carburant dans le dispositif de dosage 1. Son rôle est de maintenir constante, par des moyens déjà connus, la chute de pression du carburant dosé dans sa traversée du dispositif 1.

De cette façon, la différence des signaux fournis par les capteurs 24 et 25 est proportionnelle à la valeur instantanée du débit de carburant qui traverse le dispositif 1.

Un comparateur Co forme cette différence, proportionnelle au débit de carburant, et la compare à la valeur de consigne du débit de carburant que lui transmet la ligne Lo.

Sur les lignes L6 et L7 sont montés deux autres comparateurs C6 et C7 dont les secondes entrées sont connectées respectivement aux détecteurs 24 et 25. Ces comparateurs C6 et C7 mesurent les écarts entre, respectivement, le signal de consigne donné par le calculateur 27, nécessaire à amener le tiroir 6 sur sa butée 14a, et le signal représentant la position réelle x6 de ce tiroir 6, le signal de consigne donné par l'amplificateur 27, nécessaire à maintenir la douille 7 en position médiane, et le signal représentant la position réelle x7 de cette douille 7.

On a désigné par 28 un commutateur à deux circuits et à deux positions VI et VII dont les moyens de commande seront décrits ultérieurement.

Dans sa position VI, correspondant au fonctionnement normal et illustrée sur la figure 6, le commutateur 28 transmet, d'une part le signal d'écart fourni par le comparateur Co à l'entrée de commande de la servovanne 15, par l'intermédiaire d'un amplificateur A15, et d'autre part le signal d'écart fourni par le comparateur C7 à l'entrée de la servovanne 13, par l'intermédiaire d'un amplificateur A13. Ainsi, la servovanne 13 maintient la douille 7 dans sa position médiane précédemment définie, et la servovanne 15 fait coulisser le tiroir 6 vers la droite ou vers la gauche selon le signe du signal d'écart fourni par le comparateur Co et sur une distance proportionnelle à son amplitude, jusqu'à ce que ce signal s'annule lorsque le tiroir 6 a atteint sa valeur de consigne.

On a désigné par 30 un détecteur de pannes qui reçoit des informations notamment des comparateurs Co, C6 et C7, par des lignes L'o, L'6 et L'7, respectivement. Ce détecteur de pannes, qui peut-être un circuit électronique de réalisation connue, produit dans certaines circonstances, précisées ci-après, un signal de commande qui assure le déplacement du commutateur 28 de sa position VI à sa position VII, ainsi qu'un autre signal d'inversion de l'électro-robinet 20 sur une ligne L.

En particulier, si le tiroir 6 vient à se bloquer par exemple, le signal d'écart donné par le comparateur Co finit par s'écarter de zéro de façon notable et durable. Le détecteur de pannes 30 le détecte alors et actionne le commutateur 28 pour l'amener dans sa position VII. Dans cette position, le commutateur 28 transmet, d'une part le signal d'écart fourni par le comparateur Co à l'entrée de commande de la servovanne 13, par l'intermédiaire de l'amplificateur A13, et d'autre part le signal d'écart fourni par le comparateur C6 à l'entrée de la servovanne 15, par l'intermédiaire de l'amplificateur A15.

Ainsi, la servovanne 15 pousse le tiroir 6 vers sa butée 14a (figure 1) et la servovanne 13 positionne alors la douille 7, par rapport au tiroir 6, de façon à obtenir l'annulation du signal d'écart fourni par le comparateur Co et le débit de carburant demandé.

Au contraire, si, en cours de fonctionnement normal, la douille 7 vient à se déplacer intempestivement par exemple, le signal d'écart donné par le commutateur C7 s'écarte de zéro de façon notable et durable. Le détecteur de pannes 30 le détecte alors et actionne l'électro-robinet 20 pour écarter les butées 14a et 14b du tiroir 6. Ainsi, le dosage se poursuit normalement, le tiroir 6 ayant simplement une course disponible plus longue afin de lui permettre de réaliser toute la gamme de débit de carburant prévue malgré le déplacement intempestif de la douille 7.

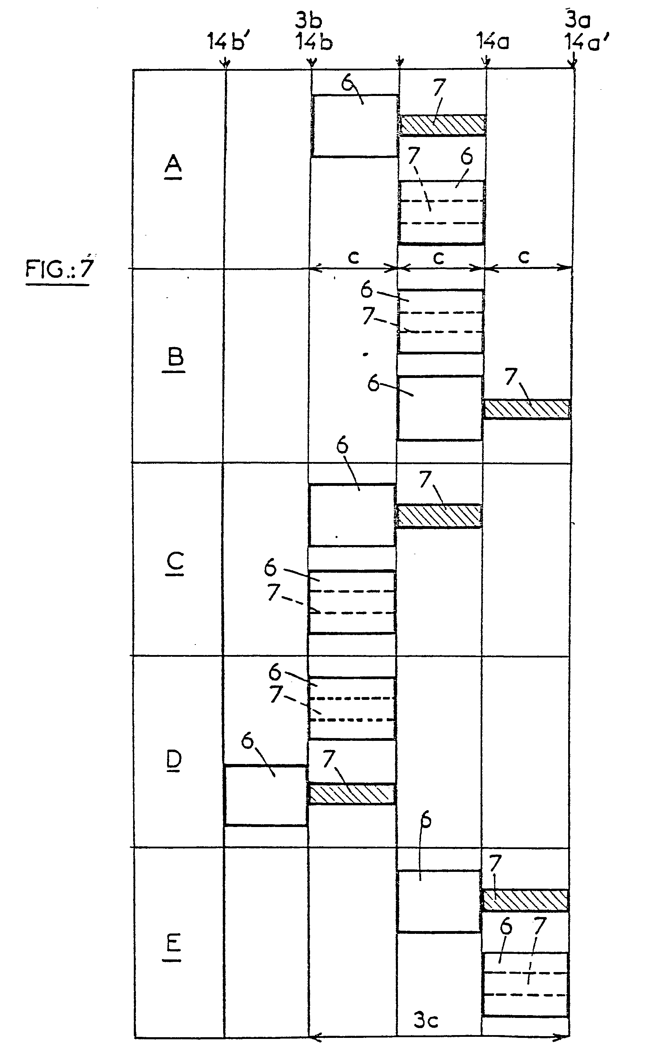

Sur la figure 7, on a représenté, dans des cases superposées, les positions relatives du tiroir 6, schématisé par un simple rectangle correspondant au seul côté 6b du tiroir 6, et de la douille 7, schématisée par un simple rectangle hachuré correspondant au seul orifice d'entrée 8e de la douille 7, dans différentes conditions de fonctionnement de la figure 1. On a supposé, pour simplifier, que les étendues axiales des éléments qui représentent le tiroir 6 et la douille 7 ont la même valeur c.

La case A de la figure 7 correspond au fonctionnement normal du dispositif : à la partie supérieure de la case, on a supposé que le tiroir 6 est appliqué contre sa butée gauche 14b, supposée en position normale, si bien que l'orifice de la douille 7 est complètement dégagé et laisse passer le débit maximal. Dans la partie inférieure de la case, au contraire, on a supposé que le tiroir 6 est parvenu contre sa butée droite 14a, également supposée dans sa position normale, si bien que l'orifice de la douille 7 est complètement masqué, ce qui correspond à un débit de carburant pratiquement nul.

Dans la case B de la figure 7, le tiroir 6 est supposé immobilisé contre sa butée 14a, supposée en position normale, soit en raison d'un blocage mécanique, soit en raison d'une panne de la servovanne correspondante 15. Comme on l'a vu, le commutateur 28 de la figure 6 passe alors de sa position VI à sa position VII, et c'est alors la douille 7 qui est déplacée par sa servovanne 13 et qui permet de passer de la situation de débit nul représentée dans la partie supérieure de la case B à la situation de débit maximum représentée dans la partie inférieure de la case B, et dans laquelle la douille 7 est en appui sur sa butée droite 3a.

Dans la case C de la figure 7, au contraire, le tiroir 6 est supposé immobilisé contre sa butée gauche 14b, supposée en position normale, pour des raisons analogues. De la même façon, c'est la douille 7 qui est alors déplacée et qui permet de passer de la situation de débit maximum représentée dans la partie supérieure de la case C à la situation de débit nul représentée dans la partie inférieure de la case C et dans laquelle la douille 7 est en appui sur sa butée gauche 3b.

Dans la case D de la figure 7, c'est la douille 7 qui est supposée immobilisée contre sa butée gauche 3b, soit en raison d'une dérive de sa commande, soit en raison d'un blocage dans la position précédemment décrite. Le commutateur 28 est alors en position VI, ou bien il y revient s'il n'y est pas grâce à l'action de détecteur de pannes 30 qui, en même temps, donne l'ordre à l'électro-robinet 20 d'écarter les butées 14a et 14b du tiroir 6 pour les amener dans les positions 14a' et 14b'. Le tiroir 6 peut alors se déplacer pour passer de la situation de débit nul représentée dans la partie supérieure de la case D à la situation de débit maximum représentée dans la partie inférieure de la case D.

Dans la case E de la figure 7, enfin, la douille 7 est supposée immobilisée contre sa butée droite 3a pour des raisons analogues, et de la même façon les butées 14a et 14b sont écartées en 14a' et 14b' pour permettre au tiroir 6 de passer de la situation de débit maximum représentée dans la partie supérieure de la case E à la situation de débit nul représentée dans la partie inférieure de la case E.

En doublant les détecteurs de position 24 et 25, ainsi que le calculateur 27, ce qui a été indiqué par des doubles traits sur la figure 6, on parvient à ce que l'installation de dosage dont le schéma est illustré sur la figure 6 fonctionne de façon sûre et permanente, indépendamment de toutes les pannes simples qui peuvent affecter ses différents composants, y compris les pannes électriques, notamment la coupure de l'alimentation des composants électriques.

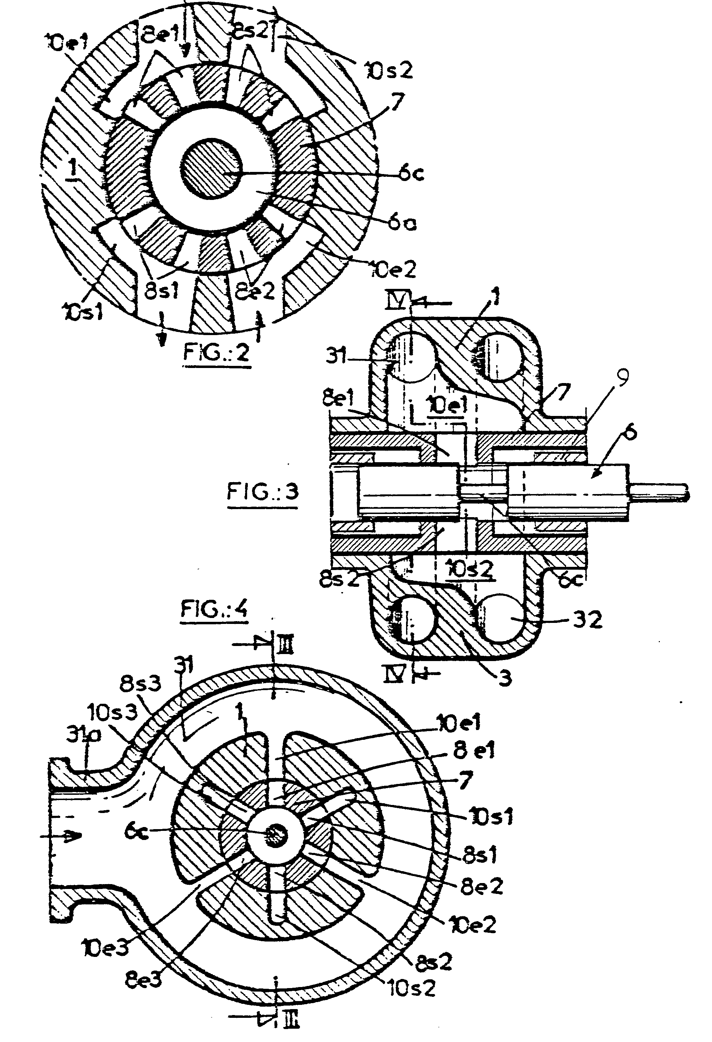

La variante qui est illustrée partiellement, en coupe transversale, sur la figure 2, ne diffère de la forme de réalisation du dispositif de dosage, illustrée sur la figure 1 et précédemment décrite, que par le fait que la paroi de la douille 7 est traversée par deux paires d'orifices d'entrée, 8e1 et 8e2, diamétralement opposés, et par deux paires d'orifices de sortie, 8s1 et 8s2, également diamétralement opposés. Dans le corps 1 sont également prévues deux chambres d'entrée, 10e1 et 10e2, diamétralement opposées l'une à l'autre, et deux chambres de sortie 10s1 et 10s2, diamétralement opposées. De cette façon, quelles que soient les positions axiales occupées par le tiroir (6) et par la douille (7), les poussées radiales exercées par le carburant sur ces deux éléments mobiles ont des résultantes nulles par symétrie axiale. Il en résulte une plus grande facilité pour déplacer le tiroir (6) et la douille (7) et un moindre risque de grippage de chacun dans son alésage respectif. Dans la forme de réalisation illustrée partiellement sur la figure 2, il est en outre remarquable que tous les orifices d'entrée et de sortie de la douille 7 se trouvent au voisinage d'un même plan transversal, ce qui permet de réduire sensiblement l'encombrement axial du dispositif de dosage.

Dans la forme de réalisation illustrée sur les figures 3 et 4, la paroi de la douille 7 est traversée par trois orifices d'entrée, 8e1 à 8e3, et par trois orifices de sortie, 8s1 à 8s3, répartis régulièrement sur son pourtour de sa paroi. Deux séries de chambres d'entrée et de sortie 10e1 à 10e3 d'une part, 10s1 à 10s3 d'autre part, sont aménagées dans le corps 1 du dispositif de dosage de façon que les orifices d'entrée, 8e1 à 8e3, et les orifices de sortie, 8s1 à 8s3, s'y ouvrent respectivement quelle que soit la position axiale de la douille coulissante 7. D'autre part, les chambres d'entrée 8e1 à 8e3 sont raccordées en parallèle à un distributeur périphérique 31, muni d'une tubulure 31a, dans laquelle le carburant sous pression est envoyé par le refoulement de la pompe — non représentée —. De même, les chambres de sortie, 10s1 à 10s3 sont raccordées en parallèle à un collecteur périphérique 32, d'où le carburant dosé sort par une tubulure — non représentée — pour être envoyé aux injecteurs de la turbomachine. Grâce à cette disposition symétrique, l'intérieur de la douille 7 est traversé par plusieurs courants carburant, qui exercent sur le tiroir des forces dont la composante radiale est pratiquement nulle.

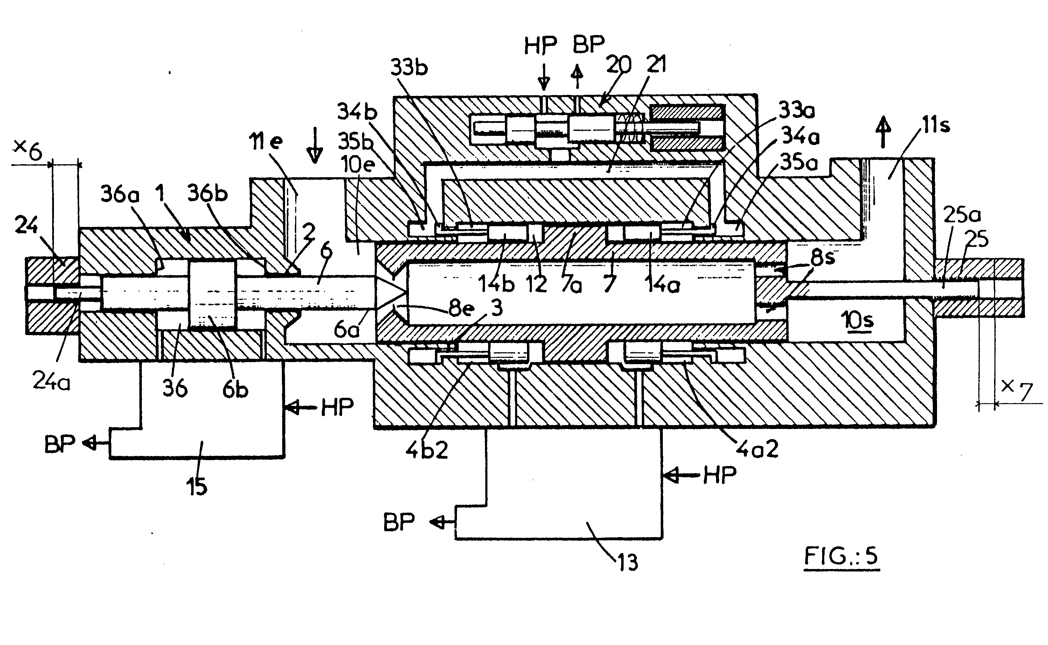

Sur la figure 5, qui représente schématiquement la seconde forme de réalisation, on a utilisé les mêmes repères que sur la figure 1, pour désigner des composants homologues. Dans cette seconde forme de réalisation, la douille 7 est encore montée librement coulissante dans un alésage 3 du corps 1. Son positionnement est assuré par un vérin, dont le piston, 7a, solidaire de la douille 7, est mobile dans une chambre cylindrique 12, dans laquelle une électrovanne 13 peut envoyer du carburant sous haute pression ou sous basse pression, comme on l'a décrit précédemment. Dans cette réalisation, cependant, les déplacements de la douille 7 sont limités par des butées mobiles, 14a et 14b, constituées respectivement par des anneaux montés coulissants dans la chambre 12. Des tiges telles que 33a et 33b relient respectivement les anneaux 14a et 14b à des organes d'arrêt, 34a ou 34b, qui se déplacent dans des chambres 35a et 35b. Ces chambres 35a et 35b reçoivent, par un conduit 21, du carburant sous haute ou basse pression, selon la position d'un électro-robinet 20. Dans le premier cas, les butées annulaires 14a et 14b occupent leurs positions normales, illustrées sur la figure 5. Dans le second cas, c'est-à-dire lorsque c'est du carburant sous basse pression qui alimente les chambres 35a et 35b, les butées annulaires 14a et 14b sont repoussées aux extrémités de la chambre 12, dans leurs positions d'effacement respectives.

L'orifice d'entrée, unique, du carburant dans la douille 7, qui a été désigné par 8e, est situé à son extrémité gauche sur la figure 1, le carburant sous haute pression arrivant à l'extérieur de la douille 7 par un conduit 11e ; après avoir traversé la douille 7, le carburant s'en échappe par des trous de sortie 8s, aménagés à l'autre extrémité de ladite douille 7. Il s'écoule alors vers les injecteurs — non représentés — de la turbomachine, par un canal de sortie 11s.

Dans cette seconde forme de réalisation, l'obturateur est constitué par une aiguille 6, dont le corps est monté coulissant, de façon étanche, dans un alésage 2 du corps 1, à l'extérieur de la douille 7 ; l'obturateur 6 est terminé par une pointe 6a qui s'engage dans l'orifice d'entrée 8e de la douille 7 ; le positionnement de l'obturateur 6 est encore assuré par un vérin constitué par un piston 6b, qui est solidaire dudit obturateur 6, et monté coulissant, dans la direction de l'axe de la douille 7, à l'intérieur d'une chambre 36, dans laquelle une électro-vanne 15 peut envoyer du carburant sous haute ou basse pression, comme on l'a décrit précédemment. La position axiale de la pointe 6a de l'obturateur 6, dans l'orifice d'entrée 8e de la douille 7, définit la section libre dudit orifice d'entrée 8e, et par suite la valeur instantanée du débit de carburant dosé. Les positions axiales instantanées de l'obturateur 6 et de la douille 7 sont déterminées par des détecteurs 24 et 25 respectivement, par exemple du type inductif, que traversent des tiges 24a et 25a, par exemple en matériau magnétique, solidaires respectivement de l'obturateur 6 et de la douille 7.

Le dispositif de dosage selon cette seconde forme de réalisation de l'invention fonctionne à peu près de la même façon que celui de la réalisation illustré sur la figure 1 et précédemment décrite. Cependant, c'est de préférence l'obturateur 6 qui est normalement maintenu dans la position médiane illustrée, à égale distance des butées fixes, 36a et 36b, formées respectivement par les parois extrêmes de la chambre 36. Et ce sont les déplacements de la douille 7 par rapport à la pointe 6a de l'obturateur 6 qui font varier la valeur instantanée du débit, de sa valeur minimale ou nulle à sa valeur maximale. Dans les différents cas de fonctionnement défectueux, qui ont été mentionnés précédemment, l'électro-robinet 20 peut être commandé de façon à produire l'effacement des butées annulaires 14a et 14b, ce qui permet de multiplier par trois la course de la douille 7.

Dans les formes de réalisation illustrées sur les figures 2 à 4, le nombre d'orifices d'entrée et de sortie, aménagés dans la douille 7, ainsi que celui des chambres d'entrée et de sortie aménagés dans le corps 1 sont matières à option ; il en est de même du nombre de groupes de perçage, d'entrée ou de sortie, associés à une même chambre d'entrée ou de sortie, qui est seulement de deux dans la réalisation illustrée sur la figure 2, mais qui pourrait être différent. Au lieu d'être alimentés par du carburant sous pression, les vérins de positionnement de l'obturateur 6 et de la douille 7, ainsi que des butées mobiles, 14a et 14b, pourraient l'être avec un fluide quelconque, sous pression. Les problèmes d'étanchéité seraient cependant plus sévères, pour éviter que le fluide de commande ne se mélange avec le carburant dosé. Comme on l'a déjà indiqué à l'occasion de la description de la figure 5, les butées effaçables peuvent être associées aussi bien à la douille 7 qu'à l'obturateur 6. Il serait possible de renoncer à ces butées effaçables, à condition d'admettre certaines pannes, d'ailleurs fort rares. Comme on l'a déjà indiqué, les rôles respectifs de l'obturateur 6 et de la douille 7 peuvent toujours être permutés. Leurs détecteurs respectifs de position sont susceptibles de nombreuses réalisations différentes, bien connues. Les positionnements de l'obturateur 6, de la douille 7 ainsi éventuellement que des butées effaçables, 14a et 14b, pourraient être également assurés par des moyens purement électriques, utilisant notamment des solénoïdes pourvus d'armatures mobiles en matériau magnétique. Des ressorts de rappel pourraient leur être associés, de même qu'aux pistons de positionnement, dans le cas où il s'agirait de vérins à simple effet.

### Revendications

1. Dispositif de dosage, notamment pour le carburant d'une turbomachine, comportant un corps (1), dans lequel deux éléments, formant respectivement une douille (7) et un obturateur (6), sont montés coulissants suivant un même axe entre au moins une position relative de fermeture, où l'obturateur (6) masque complètement au moins un orifice d'entrée (8e) ou de sortie (8s) du carburant dans la douille (7), et une position d'ouverture, où ledit obturateur (6) démasque complètement ledit orifice (8e ou 8s), caractérisé par le fait que des moyens sont prévus pour commander les positions relatives simultanées des deux éléments coulissants (6 et 7), de façon que le degré d'obturation du ou des orifices (8e, 8s) de la douille (7) par l'obturateur (6) corresponde à la valeur de consigne du débit de carburant.

2. Dispositif selon la revendication 1, caractérisé en ce que les deux éléments (6 et 7) sont montés coulissants dans des alésages distincts (2 et 3) du corps (1).

3. Dispositif selon l'une quelconque des revendications 1 et 2, caractérisé en ce que les deux éléments coulissants (6, 7) sont aménagés pour former respectivement les pistons (6a, 7a) de deux vérins, de préférence à double effet, qui servent à leurs positionnements respectifs, et sont alimentés de préférence avec du carburant sous pression, par exemple par l'intermédiaire de deux servovannes (15 et 13).

4. Dispositif selon la revendication 3, caractérisé en ce que les alimentations des deux vérins de positionnement sont commandés par un calculateur (27), par exemple par l'intermédiaire de deux servovannes (13, 15), de façon que, en fonctionnement normal, un premier élément coulissant (7 ou 6) soit maintenu dans une position médiane entre deux premières butées (3a, 3b), et que le second élément coulissant (6 ou 7) prenne une position correspondant à la valeur de consigne du débit de carburant, déterminée par le calculateur (27), entre deux secondes butées (14b, 14a), correspondant l'une (14b) au débit maximal, et l'autre (14a), au débit minimal ou nul.

5. Dispositif selon la revendication 4, caractérisé en ce qu'il comporte en outre des moyens, tels qu'une soupape régulatrice (29), pour maintenir sensiblement constante la différence des pressions du carburant entre l'entrée (11e) et la sortie (11s) du dispositif de dosage.

6. Dispositif selon la revendication 5, caractérisé en ce que des détecteurs de position (24, 25) sont associés respectivement aux deux éléments coulissants (6, 7) pour transmettre au calculateur (27) deux signaux de position, dont la différence, ou la somme algébrique, est proportionnelle à la valeur instantanée du débit du dispositif de dosage, et est comparée avec sa valeur de consigne.

7. Dispositif selon l'une quelconque des revendications 4 à 6, caractérisé en ce que la course totale du premier élément coulissant (7 ou 6), de part et d'autre de sa position médiane, est double de la course (c) du second élément coulissant (6 ou 7), et que des moyens sont prévus pour que, dans le cas où le second élément (6 ou 7) se trouve bloqué, le premier élément (7 ou 6) soit commandé par le calculateur (27) pour prendre une position relative correspondant à la valeur de consigne du débit de carburant.

8. Dispositif selon la revendication 7, caractérisé en ce que des moyens sont en outre prévus pour que, dans le cas où le premier élément (7 ou 6) se trouve bloqué au voisinage de l'une des premières butées (3a, 3b), les secondes butées (14a, 14b) soient effacées automatiquement, de façon que le second élément (6 ou 7) puisse être commandé pour prendre une position relative correspondant à la valeur de consigne du débit.

9. Dispositif selon la revendication 8, caractérisé en ce que les secondes butées (14a, 14b) sont montées coulissantes suivant le même axe que les deux éléments (6, 7), et qu'elles sont commandées, entre leurs positions normale et d'effacement, par des vérins (17a, 17b), alimentés de préférence par du carburant sous pression, par exemple par l'intermédiaire d'un électro-robinet (20), actionné par le calculateur (27).

10. Dispositif selon la revendication 9, caractérisé en ce que la course de chacune des secondes butées coulissantes (14a, 14b), entre sa position normale et sa position d'effacement, est voisine de la course normale (c) du second élément coulissant (6 ou 7).

11. Dispositif selon l'une quelconque des revendications 1 à 10, caractérisé en ce que l'obturateur forme un tiroir (6) coulissant à l'intérieur de la douille (7), de façon à masquer ou à démasquer, complètement ou partiellement, au moins un orifice d'entrée ou de sortie (8e ou 8s) du carburant, aménagé dans la paroi de la douille (7).

12. Dispositif selon la revendication 11, caractérisé en ce qu'il comprend au moins deux orifices d'entrée, respectivement deux orifices de sortie, disposés symétriquement par rapport à l'axe de sorte que les forces radiales appliquées sur le tiroir et la douille par le carburant, s'équilibrent.

13. Dispositif selon la revendication 12, caractérisé en ce que deux séries de chambres d'entrée et de sortie (10e et 10s) sont aménagées dans le corps (1) de façon que les orifices d'entrée (8e) et les orifices de sortie (8s) du carburant s'y ouvrent respectivement quelle que soit la position de la douille (7) coulissante, et que lesdites chambres d'entrée et de sortie (10e, 10s) sont raccordées en parallèle, respectivement à un distributeur périphérique (31) et à un collecteur périphérique (32), situés dans deux plans transversaux, écartés axialement l'un de l'autre.

14. Dispositif selon l'une quelconque des revendications 1 à 10, caractérisé en ce que l'obturateur (6) comporte un pointeau (6a), monté coulissant à l'extérieur de la douille (7), de façon à masquer ou démasquer, complètement ou partiellement, un orifice d'entrée (8e) ou de sortie (8s) du carburant, aménagé à l'une des extrémités de la douille (7).

**Claims**

1. A metering device, more particularly for the fuel of a turbo machine, comprising a casing (1) in which two elements, one operative as a sleeve (7) and the other as a valve lid or closure member (6), are slidable along the same axis between a relative closure position, in which the lid (6) completely masks at least one fuel inlet orifice (8e) or fuel outlet orifice (8s) in the sleeve (7), and an open position, in which the lid (6) completely uncovers such orifice (8e, 8s respectively), characterised in that means are provided so to control the simultaneous relative positions of the two sliding elements (6, 7) that the extent of closure of the or each orifice (8e, 8s) in the sleeve (7) by the lid (6) corresponds to the set value for fuel delivery.

2. A device according to claim 1, characterised in that the two elements (6, 7) are adapted to slide in separate bores (2, 3 respectively) in the casing (1).

3. A device according to claim 1 and/or 2, characterised in that the two sliding elements (6, 7) are devised as pistons (6a, 7a respectively) of two preferably double-acting rams operative for their respective positionings and are preferably supplied with pressurised fuel, for example, by way of two servo valves (15, 13).

4. A device according to claim 3, characterised in that the supplies of the two positioning rams are so controlled by a calculator (27), for example, by way of two servo valves (13, 15) that in normal operation a first sliding element (7 or 6) is retained in a central position between two first abutments (3a, 3b) and the second sliding element (6 or 7) takes up a position corresponding to the fuel delivery set value, as determined by the calculator (27), between two second abutments (14b, 14a), the first (14b) corresponding to maximum delivery and the other (14a) corresponding to minimum or zero delivery.

5. A device according to claim 4, characterised in that it also has provision such as a control valve (29) for maintaining substantially constant the difference in fuel pressure between the inlet (11e) and outlet (11s) of the metering device.

6. A device according to claim 5, characterised in that position detectors (24, 25) are respectively associated with the two sliding elements (6, 7) in order to transmit two position signals to the calculator (27), the algebraic difference or sum of the latter signals being proportional to the instantaneous value of the delivery of the metering device and being compared with the fuel delivery set value.

7. A device according to any of claims 4-6, characterised in that the total travel of the first sliding element (7 or 6) on either side of its central position is twice the travel (c) of the second sliding element (6 or 7), and means are provided so that in the event of the second element (6 or 7) being blocked the first element (7 or 6) is so controlled by the calculator (27) as to take up a relative position corresponding to the fuel delivery set value.

8. A device according to claim 7, characterised in that means are also provided so that in the event of the first element (7 or 6) becoming blocked near one of the first abutments (3a, 3b) the second abutments (14a, 14b) are retracted automatically so that the second element (6 or 7) can be actuated to move into a relative position corresponding to the delivery set value.

9. A device according to claim 8, characterised in that the second abutments (14a, 14b) are slidable along the same axis as the two elements (6, 7) and are moved between their normal position and their retracted position by rams (17a, 17b) supplied preferably with pressure fuel, for example, by way of a solenoid valve (20) actuated by the calculator (27).

10. A device according to claim 9, characterised in that the travel of each of the second sliding abutments (14a, 14b) between their normal position and their retracted position is similar to the normal travel (c) of the second sliding element (6 or 7).

11. A device according to claims 1-10, characterised in that the closure member is in the form of a spool (6) sliding in the sleeve (7) to mask or unmask completely or partly at least one fuel inlet orifice (8e) or one fuel exit orifice (8s) in the sleeve wall.

12. A device according to claim 11, characterised in that it is formed with at least two inlet orifices and two outlet orifices arranged symmetrically of the axis so that radial forces exerted on the spool and the sleeve by the fuel balance one another.

13. A device according to claim 12, characterised in that two rows of inlet chambers (10e) and outlet chambers (10s) are so contrived in the casing (1) that the inlet orifices (8e) and the outlet orifices (8s) for the fuel open respectively whatever the position of the sliding sleeve (7) and the inlet chambers (10e) and outlet chambers (10s) are connected in parallel to a peripheral distributor (31) and to a peripheral collector (32) respectively disposed in two transverse planes offset from one another axially.

14. A device according to any of claims 1-10, characterised in that the lid (6) comprises a needle valve (6a) adapted to slide outside the sleeve (7) so as to completely or partly mask or uncover a fuel inlet orifice (8e) or a fuel outlet orifice (8s) in one end of the sleeve (7).

**Patentansprüche**

1. Dosiervorrichtung, insbesondere zur Kraftstoffdosierung für ein Turbotriebwerk, mit einem Körper (1), in dem zwei Elemente, die eine Buchse (7) bzw. ein Verschlußglied (6) bilden, derart montiert sind, daß sie längs ein und derselben Achse zwischen wenigstens einer relativen Schließposition, in der das Verschlußglied (6) wenigstens eine in der Buchse (7) ausgebildete Kraftstoffeinlaß- oder -auslaßöffnung (8e bzw. 8s) vollständig abdeckt, und einer Öffnungsposition gleiten können, in der das Verschlußglied (6) die genannte Öffnung (8e oder 8s) vollständig freigibt, dadurch gekennzeichnet, daß Mittel vorgesehen sind, durch die die simultanen relativen Stellungen der beiden gleitbaren Elemente (6 und 7) derart steuerbar sind, daß der Grad, in dem die Öffnung oder die Öffnungen (8e, 8s) der Buchse (7) durch das Verschlußglied (6) verschlossen sind, dem Sollwert des Kraftstoffdurchsatzes entspricht.

2. Vorrichtung nach Anspruch 1, dadurch gekennzeichnet, daß die beiden Elemente (6, 7) in getrennten Bohrungen (2 und 3) des Körpers (1) gleitbar montiert sind.

3. Vorrichtung nach einem der Ansprüche 1 und 2, dadurch gekennzeichnet, daß die beiden gleitbaren Elemente (6, 7) derart ausgebildet sind, daß sie jeweils Kolben (6a, 7a) zweier, vorzugsweise doppeltwirkender, Zylindereinheiten sind, die zu ihrer Positionierung dienen und vorzugsweise, z. B. über zwei Servoventile (15 und 13), mit unter Druck stehendem Kraftstoff gespeist werden.

4. Vorrichtung nach Anspruch 3, dadurch gekennzeichnet, daß die Speisungen der beiden Positionierungs-Zylindereinheiten von einem Rechner (27), z. B. über zwei Elektroventile (13, 15), derart gesteuert werden, daß im Normalbetrieb ein erstes der gleitbaren Elemente (7 oder 6) in einer Zwischenstellung zwischen zwei ersten Anschlägen (3a, 3b) gehalten wird und das zweite gleitbare Element (6 oder 7) eine Stellung einnimmt, die dem von dem Rechner (27) bestimmten Sollwert des Kraftstoffdurchsatzes entspricht und zwischen zwei zweiten Anschlägen (14b, 14a) liegt, von denen der eine (14b) dem maximalen und der andere (14a) dem minimalen Durchsatz oder dem Durchsatz Null entspricht.

5. Vorrichtung nach Anspruch 4, dadurch gekennzeichnet, daß sie außerdem Mittel, z. B. ein Regelventil (29), aufweist, um die Differenz der Kraftstoffdrücke zwischen dem Eingang (11e) und dem Ausgang (11s) der Dosiervorrichtung annähernd konstant zu halten.

6. Vorrichtung nach Anspruch 5, dadurch gekennzeichnet, daß den beiden gleitbaren Elementen (6, 7) jeweils Positionsdetektoren (24, 25) zugeordnet sind, um dem Rechner (27) zwei Positionssignale zuzuführen, deren Differenz oder algebraische Summe dem Augenblickswert des Durchsatzes der Dosiervorrichtung proportional ist und mit seinem Sollwert verglichen wird.

7. Vorrichtung nach einem der Ansprüche 4 bis 6, dadurch gekennzeichnet, daß der Gesamthub des ersten gleitbaren Elements (7 oder 6) zu beiden Seiten seiner Mittelstellung doppelt so groß ist wie der Hub (c) des zweiten gleitbaren Elements (6 oder 7), und daß Mittel vorgesehen sind, die bewirken, daß für den Fall, daß das zweite Element (6 oder 7) blockiert ist, das erste Element (7 oder 6) von dem Rechner (27) derart gesteuert wird, daß es eine relative Stellung einnimmt, die dem Sollwert des Kraftstoffdurchsatzes entspricht.

8. Vorrichtung nach Anspruch 7, dadurch gekennzeichnet, daß außerdem Mittel vorgesehen sind, die bewirken, daß für den Fall, daß das erste Element (7 oder 6) in der Nähe eines der ersten Anschläge (3a, 3b) blockiert ist, die zweiten Anschläge (14a, 14b) automatisch zurücktreten, so daß das zweite Element (6 oder 7) derart gesteuert werden kann, daß es eine relative Stellung einnimmt, die dem Sollwert des Kraftstoffdurchsatzes entspricht.

9. Vorrichtung nach Anspruch 8, dadurch gekennzeichnet, daß die zweiten Anschläge (14a, 14b) derart montiert sind, daß sie längs derselben Achse gleiten können wie die beiden Elemente (6, 7), und daß sie zwischen ihren Normalstellungen und ihren zurückgezogenen Stellungen von Zylindereinheiten (17a, 17b) steuerbar sind, die vorzugsweise, z. B. über einen von dem Rechner (27) betätigten Elektroschieber (20), durch unter Druck stehenden Kraftstoff gespeist werden.

10. Vorrichtung nach Anspruch 9, dadurch gekennzeichnet, daß der Hub jedes der zweiten gleitbar angeordneten Anschläge (14a, 14b) zwischen seiner Normalstellung und seiner zurückgezogenen Stellung in der Nähe des Normalhubes (c) des zweiten gleitbaren Elements (6 oder 7) liegt.

11. Vorrichtung nach einem der Ansprüche 1 bis 10, dadurch gekennzeichnet, daß das Verschlußglied einen Schieber (6) bildet, der im Innern der Buchse (7) derart gleitbar angeordnet ist, daß er eine in der Wandung der Buchse (7) angebrachte Kraftstoffeinlaß- oder -auslaßöffnung (8e oder 8s) vollständig oder teilweise abdecken oder freigeben kann.

12. Vorrichtung nach Anspruch 11, dadurch gekennzeichnet, daß wenigstens zwei Einlaßöffnungen bzw. zwei Auslaßöffnungen vorgesehen sind, die derart symmetrisch zu der Achse angeordnet sind, daß sich die von dem Kraftstoff auf den Schieber und die Buchse ausgeübten radialen Kräfte im Gleichgewicht befinden.

13. Vorrichtung nach Anspruch 12, dadurch gekennzeichnet, daß in dem Körper (1) zwei Reihen von Eintritts- und Austrittskammern (10e und 10s) derart angebracht sind, daß die Kraftstoffeinlaßöffnungen (8e) und die Kraftstoffauslaßöffnungen (8s) sich unabhängig von der Stellung der gleitbaren Buchse (7) jeweils dorthin öffnen, und daß die Eintritts- und Austrittskammern (10e, 10s) parallel zu einem umlaufenden Verteiler (31) bzw. zu einem umlaufenden Kollektor (32) angeordnet sind, die in zwei in axialer Richtung voneinander beabstandeten transversalen Ebenen liegen.

14. Vorrichtung nach einem der Ansprüche 1 bis 10, dadurch gekennzeichnet, daß das Verschlußglied (6) eine Nadel (6a) aufweist, die außerhalb der Buchse (7) derart gleitbar montiert ist, daß sie eine an einem der Endbereiche der Buchse (7) angeordnete Kraftstoffeinlaß- oder -auslaßöffnung (8e oder 8s) vollständig oder teilweise abdeckt oder freigibt.

FIG. 1

0 190 963

FIG.: 2

FIG.: 3

FIG.: 4

2

FIG.: 5

0 190 963

FIG.:6

FIG.: 7